(19) Europäisches Patentamt
European Patent Office
Office européen des brevets

(11) EP 3 771 997 A1

(12) EUROPEAN PATENT APPLICATION

(43) Date of publication:
03.02.2021 Bulletin 2021/05

(51) Int Cl.:
*G06F 16/55* (2019.01)

(21) Application number: 20187470.8

(22) Date of filing: 23.07.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.08.2019 JP 2019142936

(71) Applicant: CANON KABUSHIKI KAISHA
OHTA-KU
Tokyo 146-8501 (JP)

(72) Inventor: IMAI, Tetsu
Tokyo, 146-8501 (JP)

(74) Representative: WESER & Kollegen
Patentanwälte PartmbB
Radeckestraße 43
81245 München (DE)

(54) SYSTEM, METHOD, AND PROGRAM

(57) A system manages a prediction model generated with input data including a plurality of parameters in a learning process and includes: a first calculation means (304) configured to calculate a learning contribution ratio of each of the plurality of parameters from a learning result; a first specifying means (304) configured to specify parameters of which the learning contribution ratios are low from the learning contribution ratios calculated by the first calculation means; a first instruction means (304) configured to give a relearning instruction using input data excluding the parameters specified by the first specifying means; a second specifying means (304) configured to specify configurations (103) corresponding to the parameters specified by the first specifying means; and a first issuing means (304) configured to issue a stop command for the configuration specified by the second specifying means.

FIG. 6B

START PROCESS OF
RECEIVING LEARNING RESULT

ACQUIRE LEARNING CONTRIBUTION RATIO OF EACH
PARAMETER FROM LEARNING RESULT AND SET
PARAMETERS WITH LOW LEARNING CONTRIBUTION RATIOS
AS LOW CONTRIBUTION PARAMETERS — S603

TRANSMIT RELEARNING COMMAND EXCLUDING
LOW CONTRIBUTION PARAMETERS TO
LEARNING PROCESSING UNIT — S604

DETERMINE PARAMETER ACQUISITION DEVICE ACQUIRING
LOW CONTRIBUTION PARAMETERS — S607

TRANSMIT OPERATION STOP COMMAND OF PARAMETER
ACQUISITION DEVICE TO GATEWAY DEVICE — S608

END

**Description**

BACKGROUND OF THE INVENTION

Field of the Invention

The present invention relates to a system, a method, and a program managing a prediction model.

Description of the Related Art

In machine learning, a prediction model is learned by understanding features from input data for learning and a practical operation is performed with the completely learned prediction model. In the related art, a system that predicts a certain affair using prediction input data using such a prediction model is known.

In a system that performs such prediction, input data generally becomes multidimensional vectors for the purpose of improving prediction precision by performing the prediction using various types of input data. Incidentally, when the number of dimensions of input data is considerable, there is a problem that considerable learning data is necessary to appropriately learn features in addition to a vast calculation learning cost. When the number of dimensions of the multidimensional vectors is vast, it is known that learning precision actually deteriorates. This is because the widths of features taken by the multidimensional vectors exponentially spread due to an increase in the number of dimensions, and thus the features cannot be sufficiently understood from the limited amount of input data.

Accordingly, in the related art, a reduction in the number of dimensions of the learning input data was examined. For example, Japanese Patent Laid-Open No. 2011-197934 discloses an invention in which a dimension reduction process includes setting parameters with the low degree of contribution to learning (hereinafter referred to as a learning contribution ratio) as dimension reduction targets.

In order to appropriately understand and learn features from multidimensional learning input data, it is necessary to incorporate the dimension reduction process, as described above. However, in Japanese Patent Laid-Open No. 2011-197934, the dimension reduction process is merely without using the parameter of the reduced dimension. Therefore, when the parameters of the reduced dimensions are collected in each configuration (for example, a device, a sensor, or software) to be acquired, transmitted, or the like before the reduction, the parameters of the reduced dimensions are continuously collected even though the dimension reduction process is performed. In that case, there is a problem that a configuration for acquiring the parameters of the reduced dimensions and an occurring operational cost of a communication process are wasted.

SUMMARY OF THE INVENTION

The present invention provides a system, a method and program, it is possible to reduce a wasted operational cost in a system that performs prediction in machine learning.

The present invention, in its first aspect provides a system as specified claims 1 to 6. The present invention, in its second aspect provides a method as specified claim 7. The present invention, in its third aspect provides a program as specified claim 8.

Further features of the present invention will become apparent from the following description of exemplary embodiments with reference to the attached drawings.

BRIEF DESCRIPTION OF THE DRAWINGS

Fig. 1 is a block diagram illustrating a configuration of an information processing system according to Example 1 of the present invention.
Fig. 2A is a block diagram illustrating a hardware configuration of a parameter optimization system 101 and a gateway device 102.
Fig. 2B is a block diagram illustrating a hardware configuration of a parameter acquisition device 103.
Fig. 3 is a block diagram illustrating a functional configuration of the parameter optimization system 101.
Fig. 4 is a block diagram illustrating a functional configuration of the gateway device 102.
Fig. 5 is a block diagram illustrating a functional configuration of the parameter acquisition device 103.
Fig. 6A is a sequence diagram according to Example 1 of the present invention.
Fig. 6B is a flowchart illustrating a flow of a process in a learning contribution determination unit 304 according to Example 1 of the present invention.

Fig. 7A is a sequence diagram according to Example 2 of the present invention.

Fig. 7B is a flowchart illustrating a flow of a process in the learning contribution determination unit 304 according to Example 2 of the present invention.

Fig. 8A a sequence diagram according to Example 3 of the present invention.

Fig. 8B is a flowchart illustrating a flow of a process in the learning contribution determination unit 304 according to Example 3 of the present invention.

DESCRIPTION OF THE EMBODIMENTS

Hereinafter, modes for carrying out the present invention will be described in detail with reference to the drawings.

[Example 1]

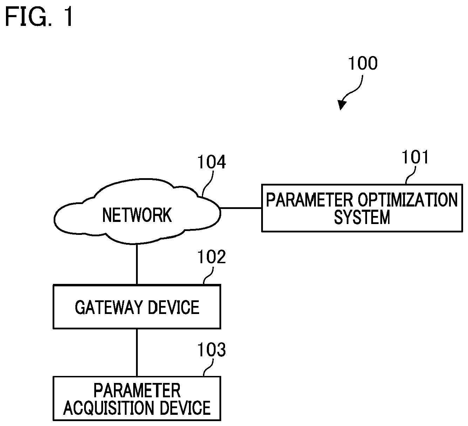

Fig. 1 is a block diagram illustrating a configuration of an information processing system according to Example 1 of the present invention.

An information processing system 100 according to this example is a system that includes one or more parameter acquisition devices 103 and a machine learning system performing learning and prediction using parameters acquired by the parameter acquisition devices 103. In this example, the machine learning system is assumed to be contained in a parameter optimization system 101. In this example, the parameter acquisition device 103 is provided for each parameter to be acquired. The information processing system 100 is a system that manages a prediction model.

As a specific example of a learning and prediction process treated in this example, automated driving of an automobile can be exemplified.

The information processing system 100 according to this example assigns a behavior of a driver as an answer label to parameters collected in various configurations mounted in automobiles in manual driving and generates supervised data, that is, learning input data. The various configurations mounted in the automobiles are the parameter acquisition devices 103 such as image sensors, distance sensors, and acceleration sensors. Table 1 is a table that shows examples of supervised data. The information processing system 100 generates a prediction model by preparing for and learning many pieces of supervised data as shown in Table 1.

[Table 1]

| Values of first image sensor (pixel data) | ... | Value of first distance sensor | ... | Value of acceleration sensor | ... | Answer label (behavior of driver) |
|---|---|---|---|---|---|---|
| 0, 231, 54, 35, 21, ... | ... | 22.4 | ... | 2.6 | ... | Turn handle 10 degrees Step accelerator by 2 Step brake by 0 |
| ... | | ... | ... | ... | ... | ... |

In a practical operation, the information processing system 100 determines a route from current value coordinates acquired by the GPS, destination coordinates input by a user, and road information. GPS is an abbreviation for Global Positioning System. The information processing system 100 travels along the determined route by inputting real-time parameters collected by the parameter acquisition devices 103 to a prediction model, predicting (determining) a next behavior, and operating an automobile. Table 2 is a table that shows examples of parameters at the time of prediction and prediction results.

[Table 2]

| Values of first image sensor (pixel data) | ... | Value of first distance sensor | ... | Value of acceleration sensor | ... | Prediction result (next behavior in automated driving) |
|---|---|---|---|---|---|---|
| 0,45,79,132,210, | ... | 19.5 | ... | 0.2 | ... | Turn handle 0 degrees Step accelerator by 4 Step brake by 0 |
| ... | ... | ... | ... | ... | ... | ... |

The application of the present invention to the automated driving of the automobile as in this example is merely one example of the present invention. The present invention can be applied to, for example, any of a smart home, an airplane, a ship, a robot such as a drone, an image processing device including at least one of a printing device and a scanner, a 3D printer, and a communication relay device including a plurality of parameter acquisition devices. That is, the prediction model according to the present invention can be applied to any of control on any of a smart home, an airplane, a ship, a robot such as a drone, an image processing device including at least one of a printing device and a scanner, a 3D printer, and a communication relay device.

The information processing system 100 is configured by connecting the parameter optimization system 101 to a gateway device 102 via a network 104. The network 104 is, for example, an HTTP-based network. HTTP is an abbreviation for Hypertext Transfer Protocol. The parameter acquisition device 103 digitizes and acquires various physical amounts using measurement devices. The gateway device 102 serves as a firewall. In addition, the gateway device 102 performs operation control on the parameter acquisition device 103. For example, the gateway device 102 selects transmission of parameters collected by the parameter acquisition device 103 via the network 104.

In this example, examples of the parameter acquisition devices 103 include an image sensor, a distance sensor, an acceleration sensor, and a GPS terminal mounted in an automobile. The gateway device 102 is mounted in an automobile and performs operation control of the parameter acquisition device 103, transmission control of parameters collected by the parameter acquisition device 103, and the like. An example of the gateway device 102 is an IoT control module connected to the network 104. IoT is an abbreviation for Internet of Things. The gateway device 102 transmits parameter values acquired by the parameter acquisition devices 103 to the parameter optimization system 101 via the network 104 periodically or aperiodically. The parameter optimization system 101 performs a learning process and a prediction process based on the received parameter values. The parameter optimization system 101 can transmit a control command for the parameter acquisition device 103 to the gateway device 102 via the network 104.

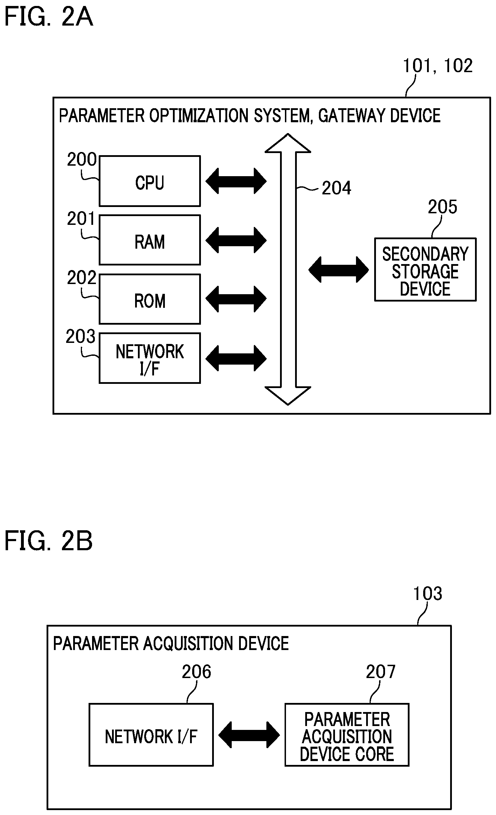

Fig. 2A is a block diagram illustrating a hardware configuration of a parameter optimization system 101 and a gateway device 102. In this example, a hardware configuration of the parameter optimization system 101 and a hardware configuration of the gateway device 102 are the same, and thus both hardware configurations will be described with reference to Fig. 2A. A RAM 201 is a memory that temporarily records data. A ROM 202 is a memory that records an embedded program and data. A network interface 203 is an interface that communicates with another computer and a network device connected to the network 104 via the network 104. A communication scheme for the network interface 203 and the network 104 may be one of wired and wireless schemes. A secondary storage device 205 is a storage device typified by an HDD or a flash memory. A CPU 200 executes a program read from the RAM 201, the ROM 202, the secondary storage device 205, or the like. The CPU 200, the RAM 201, the ROM 202, the network interface 203, and the secondary storage device 205 are connected to each other via a system bus 204. Unless otherwise mentioned, the system bus 204 is a bus that propagates a control command from the CPU 200 to hardware connected to the system bus 204 in this example.

Fig. 2B is a block diagram illustrating a hardware configuration of a parameter acquisition device 103. A network interface 206 is an interface that communicates with another computer and a network device connected to the network 104 via the network 104. A communication scheme for the network interface 203 and the network 104 may be one of wired and wireless schemes. A parameter acquisition device core 207 measures and digitizes various physical amounts of the real world. Parameters measured and digitized by the parameter acquisition device core 207 are transmitted to other computers and network devices connected to the network 104 via the network 104 by the network interface 206.

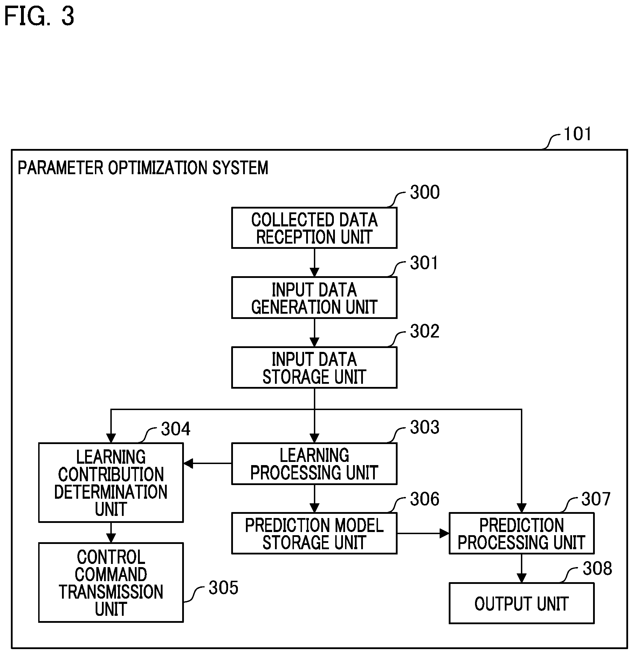

Fig. 3 is a block diagram illustrating a functional configuration of the parameter optimization system 101. The functional configuration of the parameter optimization system 101 is realized by causing the CPU 200 to execute a program stored in the RAM 201, the ROM 202, the secondary storage device 205, or the like.

First, a flow of a process at the time of learning will be described. A collected data reception unit 300 of the parameter optimization system 101 receives, as collected data, parameters collected by the parameter acquisition device 103 and transmitted via the gateway device 102. The collected data includes a plurality of parameters. An input data generation unit 301 performs preprocessing on the collected data received by the collected data reception unit 300 and processes the collected data to obtain input data. Examples of the collected data before the preprocessing and the input data after the preprocessing are shown in Table 3.

[Table 3]

| Collected data | | | | | | Input data |
|---|---|---|---|---|---|---|
| Values of first image sensor (pixel data) | ... | Value of first distance sensor | ... | Value of acceleration sensor | ... | |
| 0, 231, 54, 35, 21, ... | ... | 22.4 | ... | 2.6 | ... | 0, 231, 54, 35, 21, ..., 22.4, ... 2.6, ... |

(continued)

| Collected data | | | | | | Input data |
|---|---|---|---|---|---|---|
| Values of first image sensor (pixel data) | ... | Value of first distance sensor | ... | Value of acceleration sensor | ... | |
| ... | ... | ... | ... | ... | ... | ... |

The parameter optimization system 101 stores the input data processed through the preprocessing in the input data storage unit 302. The learning processing unit 303 reads the input data from the input data storage unit 302 and performs a learning process. The learning processing unit 303 generates a prediction model through the learning process. In this example, a multilayered neural network is assumed to be used in a machine learning algorithm. Here, this is exemplary and the present invention can be applied even when another machine learning algorithm is used.

A learning contribution determination unit 304 calculates a learning contribution ratio of each parameter included in the collected data from the prediction model generated through the learning process in the learning processing unit 303. In the calculation of the learning contribution ratio, various schemes can be used with machine learning algorithms. However, when a 3-layered neural network that treats N-dimensional input data at this time is described as an example, a learning contribution ratio of an n-th dimensional parameter in the input data can be obtained in a calculation expression (1) below. Wij indicates a weight from a node i of a p-th layer to a node j of a p+1-th layer. X, Y, and M are the numbers of nodes of an intermediate layer (a first layer), an intermediate layer (a second layer), and an output layer (a third layer).

$$\frac{\left| \sum_{x=1}^{X} \sum_{y=1}^{Y} \sum_{m=1}^{M} (w_{nx} \times w_{xy} \times w_{ym}) \right|}{\left| \sum_{i=1}^{N} \sum_{x=1}^{X} \sum_{y=1}^{Y} \sum_{m=1}^{M} (w_{ix} \times w_{xy} \times w_{ym}) \right|} \quad \cdots(1)$$

The learning contribution determination unit 304 determines a parameter with a low learning contribution ratio (hereinafter referred to as a low contribution parameter) from the calculated learning contribution ratio. That is, the learning contribution determination unit 304 specifies a parameter with a low learning contribution ratio from the calculated learning contribution ratio. Examples of low contribution parameters and the learning contribution ratios calculated from the learning results by the learning contribution determination unit 304 are shown in Table 4. In Table 4, each of a first image sensor, a second image sensor, a first distance sensor, a second distance sensor, a third distance sensor, and an acceleration sensor is an example of the parameter acquisition device 103. Each of the first and second image sensors is a device that acquires a plurality of parameters. Each of the first distance sensor, the second distance sensor, the third distance sensor, and the acceleration sensor is a device that acquires one parameter. In this example, for example, a learning contribution ratio of 0.0005 is set as a threshold, a parameter with a learning contribution ratio less than the threshold is set as a low contribution parameter, and a parameter with a learning contribution ratio equal to or greater than the threshold is not set as a low contribution parameter. In this case, in Table 4, parameters acquired by the second distance sensor (with a learning contribution ratio of 0.0002) and the third distance sensor (with a learning contribution ratio of 0.0004) are low contribution parameters.

[Table 4]

| Parameter acquisition device | First image sensor | Second image sensor | ... | First distance sensor | Second distance sensor | Third distance sensor | ... | Acceleration sensor |
|---|---|---|---|---|---|---|---|---|
| Contribution ratio | 0.0008, 0.0006, 0.0010, 0.0009, ... | 0.0006, 0.0007, 0.0011, 0.0007, ... | ... | 0.0010 | 0.0002 | 0.0004 | ... | 0.05 |

The parameter optimization system 101 transmits information regarding the low contribution parameters determined by the learning contribution determination unit 304 to the learning processing unit 303. A control command transmission unit 305 transmits an operation stop command for the parameter acquisition device 103 acquiring parameters considered as the low contribution parameters by the learning contribution determination unit 304 to the gateway device 102. In the case of Table 4, the control command transmission unit 305 transmits operation stop commands for the second and third distance sensors to the gateway device 102.

Incidentally, in this example, with regard to the first and second image sensors, for example, a plurality of pieces of pixel data are acquired by one sensor and the acquired plurality of pieces of pixel data are set as a plurality of parameters. In this way, when the plurality of parameters are acquired from one parameter acquisition device 103, the acquired plurality of parameters are considered to include parameters of learning contribution ratios less than the threshold and parameters of learning contribution ratios equal to or greater than the threshold.

Accordingly, in this example, when a plurality of parameters are acquired from one parameter acquisition device 103 and the learning contribution ratios of all the plurality of parameters are less than threshold, the learning contribution determination unit 304 sets the plurality of parameters as low contribution parameters. When a plurality of parameters are acquired from one parameter acquisition device 103 and the learning contribution ratio of any of the plurality of parameters is equal to or greater than the threshold, the learning contribution determination unit 304 does not set the plurality of parameters as low contribution parameters.

In this example, when a plurality of parameters are acquired from one parameter acquisition device 103 and a sum value of learning contribution ratios of the plurality of parameters is less than a sum value threshold, the learning contribution determination unit 304 sets the plurality of parameters as low contribution parameters. When a plurality of parameters are acquired from one parameter acquisition device 103 and the sum value of learning contribution ratios of the plurality of parameters is equal to or greater than the sum value threshold, the learning contribution determination unit 304 does not set the plurality of parameters as low contribution parameters.

The control command transmission unit 305 transmits an operation stop command for the parameter acquisition device 103 acquiring the plurality of parameters considered to be the low contribution parameters by the learning contribution determination unit 304, as described above.

When a plurality of parameters are acquired from one parameter acquisition device 103 and a learning contribution ratio of any of the plurality of parameters is less than the threshold, the learning contribution determination unit 304 may set the plurality of parameters as low contribution parameters. In this case, when a plurality of parameters are acquired from one parameter acquisition device 103 and the learning contribution ratios of all the plurality of parameters are equal to or greater than the threshold, the learning contribution determination unit 304 may set the plurality of parameters as low contribution parameters.

After information regarding the low contribution parameters is received from the learning contribution determination unit 304, the learning processing unit 303 acquires input data from the input data storage unit 302, excludes the low contribution parameters from the acquired input data, and performs the learning process again. The parameter optimization system 101 stores the prediction model generated through the learning process in a prediction model storage unit 306.

Next, a flow of a process at the time of prediction will be described. First, the parameter acquisition device 103 collects parameters. Subsequently, the parameter acquisition device 103 transmits the parameters to the parameter optimization system 101 via the gateway device 102. The parameter optimization system 101 causes the collected data reception unit 300 to receive the parameters from the gateway device 102 as collected data. The input data generation unit 301 performs preprocessing on the collected data received by the collected data reception unit 300 to be processed as input data. The parameter optimization system 101 stores the input data processed by the input data generation unit 301 in the input data storage unit 302. A prediction processing unit 307 acquires a prediction model from the prediction model storage unit 306 and inputs the input data acquired from the input data storage unit 302 to the prediction model. The prediction processing unit 307 transmits a prediction result output by the prediction model to an output unit 308. The output unit 308 outputs the prediction result from the prediction processing unit 307. The output process performed by the output unit 308 may be any one of processes of displaying the prediction result on a screen, outputting the prediction result as a sound, transmitting the prediction result by an electronic mail or chatting, storing the prediction result in a storage device, causing a printing device to print the prediction result, and performing control to transmit the prediction result to a device. The output process performed by the output unit 308 may be a combination of the above-described processes. Examples of prediction results and the parameters collected by the parameter acquisition device 103 are shown in Table 2.

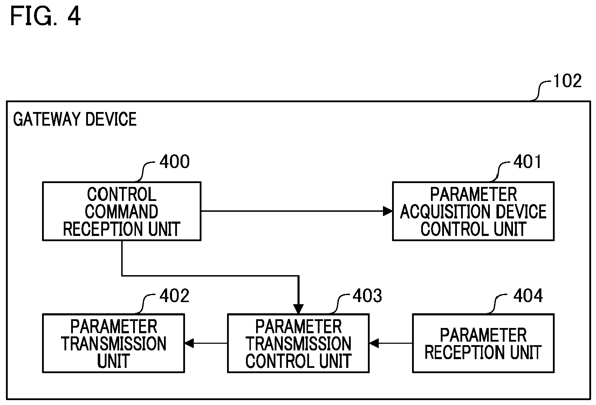

Fig. 4 is a block diagram illustrating a functional configuration of the gateway device 102. The functional configuration of the gateway device 102 is realized by causing a CPU 200 to execute a program stored in the RAM 201, the ROM 202, the secondary storage device 205, or the like.

In the gateway device 102, a parameter reception unit 404 receives the parameters transmitted from the parameter acquisition device 103 periodically or at a predetermined timing. The gateway device 102 transmits the received parameters from a parameter transmission unit 402 to the parameter optimization system 101 via a parameter transmission control unit 403. In the gateway device 102, a control command reception unit 400 receives a control command transmitted from the parameter optimization system 101 and a parameter acquisition device control unit 401 controls the parameter acquisition device 103 in accordance with the received control command. For example, when the control command reception unit 400 receives an operation stop command for a specific parameter acquisition device 103 among a plurality of parameter acquisition devices 103, the parameter acquisition device control unit 401 performs control such that an operation of the specific parameter acquisition device 103 is stopped.

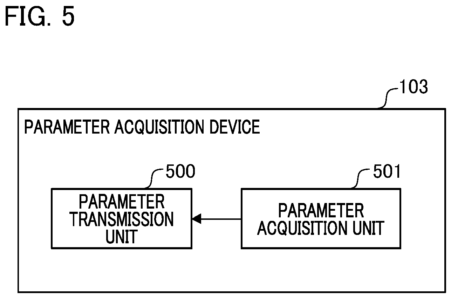

Fig. 5 is a block diagram illustrating a functional configuration of the parameter acquisition device 103. The functional configuration of the parameter acquisition device 103 is realized by causing a CPU of the parameter acquisition device 103 to execute a program and/or by hardware. An operation of the parameter acquisition device 103 is realized by transmitting the parameters collected by the parameter acquisition device core 207 from the network interface 206. The parameter acquisition device 103 transmits the parameters collected by a parameter acquisition unit 501 from a parameter transmission unit 500 to the gateway device 102.

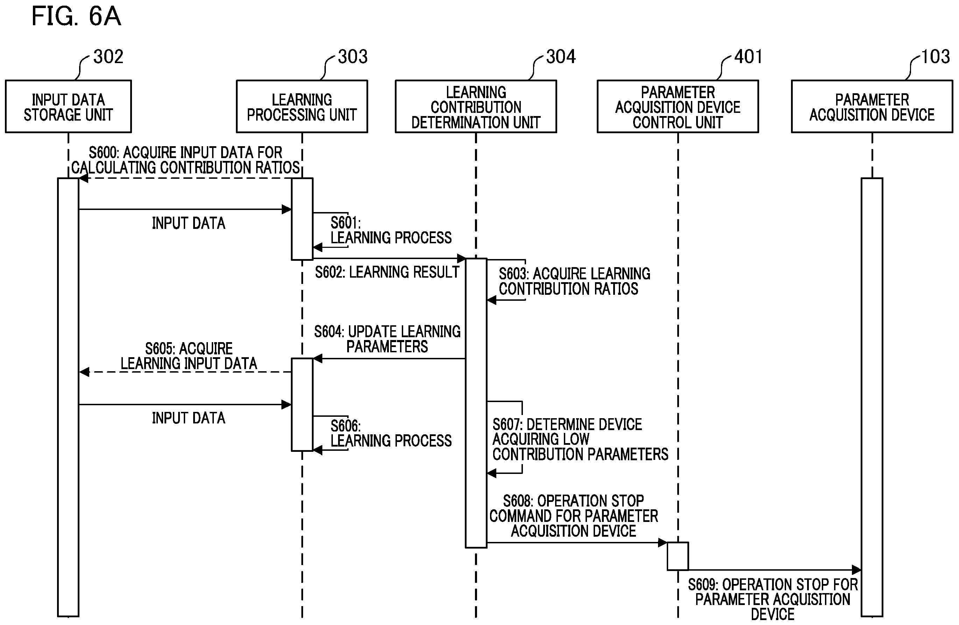

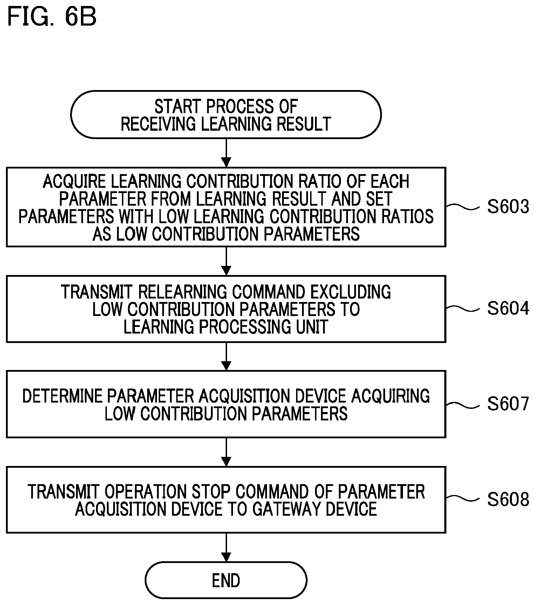

Fig. 6A is a sequence diagram according to Example 1 of the present invention. Fig. 6B is a flowchart illustrating a flow of a process in the learning contribution determination unit 304 according to Example 1 of the present invention. In Fig. 6A, to facilitate visibility, the control command transmission unit 305 and the control command reception unit 400 that do not perform processes other than the transmission and reception processes are omitted.

The learning processing unit 303 acquires input data for calculating the learning contribution ratios from the input data storage unit 302 (step S600 of Fig. 6A). The learning processing unit 303 performs the learning process using the input data acquired in step S600 (step S601 of Fig. 6A) and transmits a learning result to the learning contribution determination unit 304 (step S602 of Fig. 6A).

The learning contribution determination unit 304 receives the learning result transmitted in step S602, acquires the learning contribution ratios of the parameters including the input data from the received learning result, and sets the parameters with low learning contribution ratios as low contribution parameters (step S603 of Figs. 6A and 6B). That is, the learning contribution determination unit 304 specifies the parameters with the low learning contribution ratios. The learning contribution determination unit 304 transmits a relearning command excluding the low contribution parameters to the learning processing unit 303 based on determination information of the low contribution parameters of step S603 (step S604 of Figs. 6A and 6B). That is, the learning contribution determination unit 304 gives an instruction to perform relearning with the input data excluding the parameters specified as the low contribution parameters.

The learning processing unit 303 receives the relearning command transmitted in step S604 and acquires learning input data excluding the low contribution parameters from the input data storage unit 302 in response to the received relearning command (step S605 of Fig. 6A). The learning processing unit 303 performs the learning process using the learning input data acquired in step S605 (step S606 of Fig. 6A). The learning processing unit 303 stores the prediction model generated through the learning process of step S606 in the prediction model storage unit 306 and replaces the prediction model with the prediction model during a practical operation by an automatic or manual operation.

The learning contribution determination unit 304 determines the parameter acquisition device 103 acquiring the parameters considered as the low contribution parameters (step S607 of Figs. 6A and 6B). That is, the learning contribution determination unit 304 specifies the parameter acquisition device 103 acquiring the parameters considered as the low contribution parameters in step S607. The parameter acquisition device 103 acquiring the parameters considered as the low contribution parameters is an example of a configuration corresponding to the specified parameters. The learning contribution determination unit 304 transmits an operation stop command for the parameter acquisition device 103 specified in step S607 to the control command reception unit 400 of the gateway device 102 via the control command transmission unit 305 (step S608 of Figs. 6A and 6B). That is, the learning contribution determination unit 304 is an example of an issuing unit that issues a stop command for the parameter acquisition device 103 as the specified configuration. The control command reception unit 400 receives the operation stop command transmitted in step S608. The parameter acquisition device control unit 401 performs control such that an operation of the parameter acquisition device 103 specified in step S607 is stopped in response to the operation stop command received by the control command reception unit 400 (step S609 of Fig. 6A).

[Example 2]

In Example 2, since block diagrams of a system configuration, a hardware configuration, and each configuration are the same as those illustrated in Figs 1 to 5 in Example 1, the description of the block diagrams of the configurations will be omitted and Figs. 1 to 5 can be referred to.

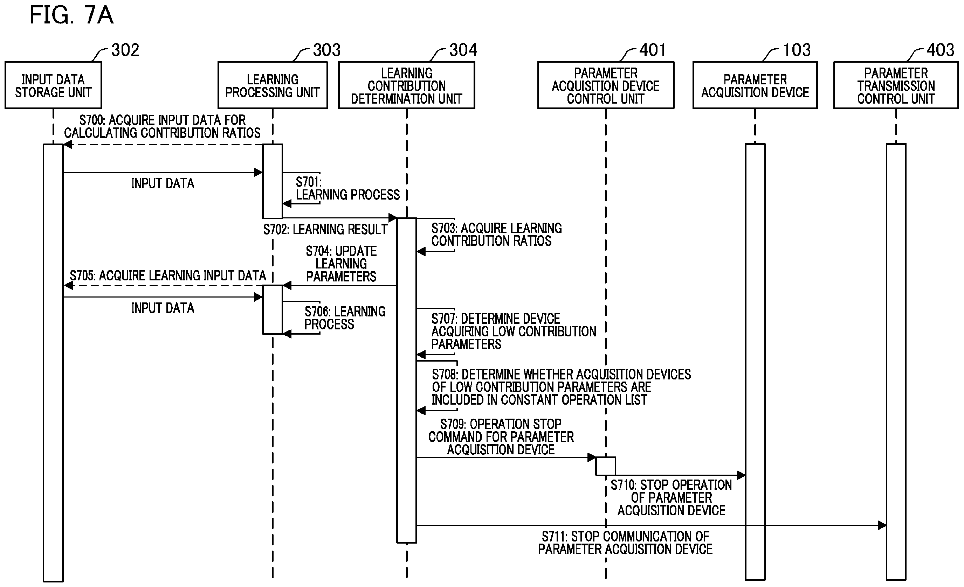

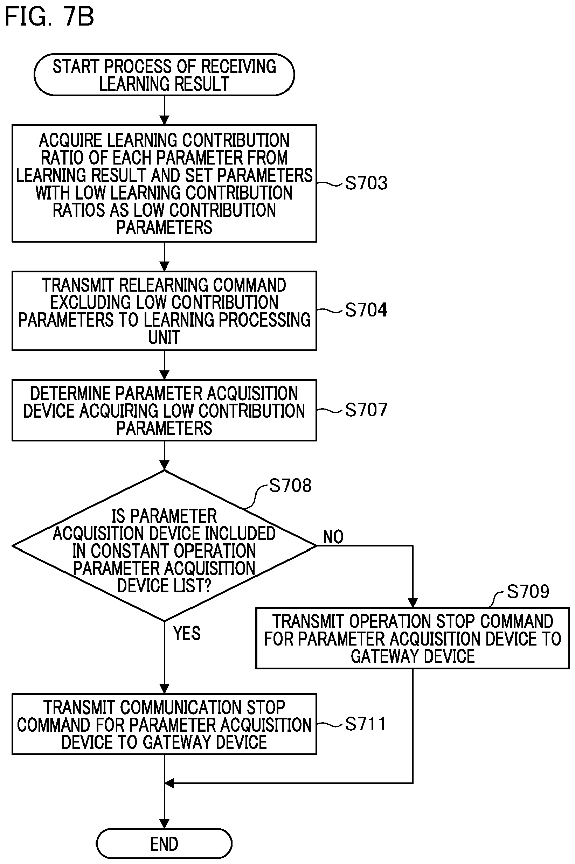

Fig. 7A is a sequence diagram according to Example 2 of the present invention. Fig. 7B is a flowchart illustrating a flow of a process in the learning contribution determination unit 304 according to Example 2 of the present invention. In Fig. 7A, to facilitate visibility, the control command transmission unit 305 and the control command reception unit 400 that do not perform processes other than the transmission and reception processes are omitted.

The learning processing unit 303 acquires the input data for calculating the learning contribution ratios from the input data storage unit 302 (step S700 of Fig. 7A). The learning processing unit 303 performs the learning process using the input data acquired in step S700 (step S701 of Fig. 6A) and transmits a learning result to the learning contribution determination unit 304 (step S702 of Fig. 7A).

The learning contribution determination unit 304 receives the learning result transmitted in step S702, acquires the learning contribution ratios of the parameters including the input data from the received learning result, and sets the parameters with low learning contribution ratios as low contribution parameters (step S703 of Figs. 7A and 7B). The learning contribution determination unit 304 transmits a relearning command excluding the low contribution parameters to the learning processing unit 303 based on determination information of the low contribution parameters of step S703 (step S704 of Figs. 7A and 7B). That is, the learning contribution determination unit 304 gives an instruction to perform relearning with the input data excluding the parameters specified as the low contribution parameters.

The learning processing unit 303 receives the relearning command transmitted in step S704 and acquires learning input data excluding the low contribution parameters from the input data storage unit 302 in response to the received relearning command (step S705 of Fig. 7A). The learning processing unit 303 performs the learning process using the learning input data acquired in step S705 (step S706 of Fig. 7A). The learning processing unit 303 stores the prediction model generated through the learning process of step S706 in the prediction model storage unit 306 and replaces the prediction model with the prediction model during a practical operation by an automatic or manual operation.

The learning contribution determination unit 304 determines the parameter acquisition device 103 acquiring the parameters considered as the low contribution parameters (step S707 of Figs. 7A and 7B). That is, the learning contribution determination unit 304 specifies the parameter acquisition device 103 acquiring the parameters considered as the low contribution parameters in step S707.

In this example, the learning contribution determination unit 304 determines that a list of the parameter acquisition devices 103 which operate constantly can be referred to, irrespective of the learning contribution ratios for the learning process among the parameter acquisition devices 103 (hereinafter referred to as a constant operation parameter acquisition device list). The constant operation parameter acquisition device list is stored in advance in storage devices such as the RAM 201, the ROM 202, and the secondary storage device 205 of the parameter optimization system 101.

The learning contribution determination unit 304 determines whether the parameter acquisition device 103 acquiring the parameters considered as the low contribution parameters is included in the constant operation parameter acquisition device list (step S708 of Figs. 7A and 7B). When the parameter acquisition device 103 acquiring the parameters considered as the low contribution parameters is not included in the constant operation parameter acquisition device list (NO in step S708 of Fig. 7B), the process proceeds to step S709 of Figs. 7A and 7B. When the parameter acquisition device 103 acquiring the parameters considered as the low contribution parameters is included in the constant operation parameter acquisition device list (YES in step S708 of Fig. 7B), the process proceeds to step S711 of Figs. 7A and 7B. That is, the learning contribution determination unit 304 causes processes to be different according to whether the parameter acquisition device 103 acquiring the parameters considered as the low contribution parameters is included in the constant operation parameter acquisition device list.

The learning contribution determination unit 304 transmits an operation stop command for the parameter acquisition device 103 specified in step S707 to the control command reception unit 400 of the gateway device 102 via the control command transmission unit 305 in step S709 of Figs. 7A and 7B. The control command reception unit 400 receives the operation stop command transmitted in step S709. The parameter acquisition device control unit 401 performs control such that an operation of the parameter acquisition device 103 specified in step S707 is stopped in response to the operation stop command received by the control command reception unit 400 (step S710 of Fig. 7A).

The learning contribution determination unit 304 transmits a communication stop command for the parameter acquisition device 103 specified in step S707 to the control command reception unit 400 of the gateway device 102 via the control command transmission unit 305 in step S711 of Figs. 7A and 7B. The control command reception unit 400 receives the communication stop command transmitted in step S709. The parameter transmission control unit 403 performs control such that the transmission of the parameters acquired by the parameter acquisition device 103 specified in step S707 is stopped in response to the communication stop command received by the control command reception unit 400 (step S711 of Fig. 7A).

[Example 3]

In Example 3, since block diagrams of a system configuration, a hardware configuration, and each configuration are the same as those illustrated in Figs 1 to 5 in Example 1, the description of the block diagrams of the configurations will be omitted and Figs. 1 to 5 can be referred to.

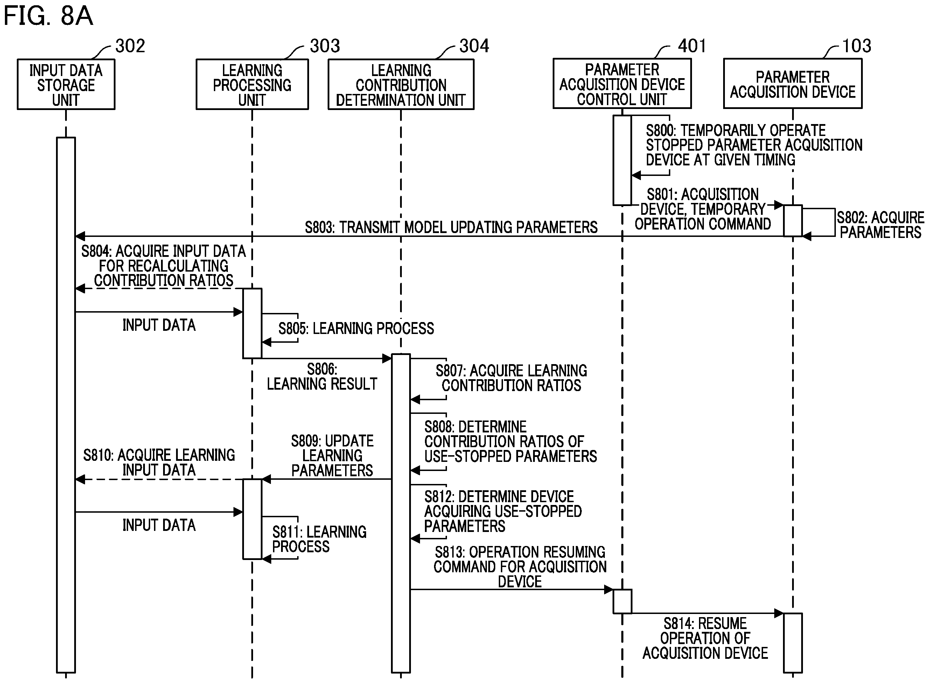

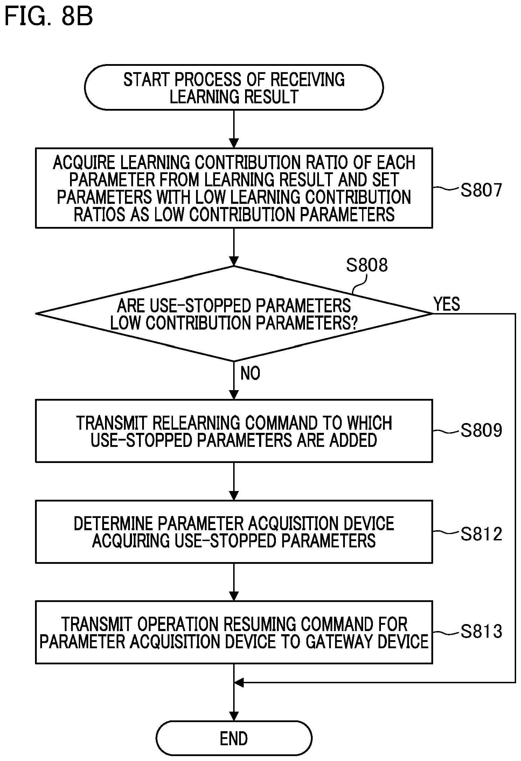

Fig. 8A a sequence diagram according to Example 3 of the present invention. Fig. 8B is a flowchart illustrating a flow of a process in the learning contribution determination unit 304 according to Example 3 of the present invention. In Fig. 8A, to facilitate visibility, the configuration in which a process other than the transmission and reception processes in this example is not performed and the configuration in which only preprocessing is performed on the collected data will be omitted. In this example, operations of some of the parameter acquisition devices 103 are assumed to stop in advance by the functions described in Examples 1 and 2.

In this example, the parameter acquisition device control unit 401 transmits a temporary operation command to the parameter acquisition device 103 which has already stopped the operation (hereinafter referred to as a use-stopped parameter acquisition device) at a predetermined timing (steps S800 and S801 of Fig. 8A). The predetermined timing at which the parameter acquisition device control unit 401 transmits the temporary operation command may be a given periodic timing, may be an aperiodic timing, or may be a timing in accordance with occurrence of a predetermined event. The parameter acquisition device control unit 401 may transmit the temporary operation command to the use-stopped parameter acquisition device in response to a manual operation.

The use-stopped parameter acquisition device receiving the temporary operation command operates to acquire the parameters (step S802 of Fig. 8A). The gateway device 102 transmits the parameters acquired by the parameter acquisition device 103 in step S802 to the parameter optimization system 101 (step S803 of Fig. 8A). The parameters are transmitted by the gateway device 102 via the parameter reception unit 404, the parameter transmission control unit 403, and the parameter transmission unit 402.

The parameter optimization system 101 receives the parameters acquired by the parameter acquisition device 103 in step S802 and accumulates the received parameters in the input data storage unit 302 via the collected data reception unit 300 and the input data generation unit 301. When the parameters acquired by the parameter acquisition device 103 in step S802 are sufficiently accumulated in the input data storage unit 302, the learning processing unit 303 acquires the input data for calculating the learning contribution ratios from the input data storage unit 302 (step S804 of Fig. 8A). When a predetermined condition is satisfied, the parameters are assumed to be sufficiently accumulated in the input data storage unit 302. The predetermined condition is, for example, a condition that the number of pieces of input data accumulated after the operation of the use-stopped parameter acquisition device exceeds a threshold.

The learning processing unit 303 performs the learning process using the input data acquired in step S804 (step S805 of Fig. 8A). The learning processing unit 303 transmits a learning result learned in step S805 to the learning contribution determination unit 304 (step S806 of Fig. 8A). The learning contribution determination unit 304 receives the learning result transmitted in step S806, acquires the learning contribution ratios of the parameters included in the input data from the received learning result, and sets the parameters with low learning contribution ratios as low contribution parameters (step S807 of Figs. 8A and 8B).

The learning contribution determination unit 304 determines whether the learning contribution ratios of the parameters acquired by the use-stopped parameter acquisition device which has temporarily operated (hereinafter referred to as use-stopped parameters) are low without being changed from the learning contribution ratios at the time of previous learning (step S808 of Figs. 8A and 8B). That is, in step S808 of Fig. 8B, the learning contribution determination unit 304 determines whether the use-stopped parameters are the low contribution parameters even in the learning of step S805. When the learning contribution determination unit 304 determines that the use-stopped parameters are the low contribution parameters without being changed from those at the previous learning time (YES in step S808 of Fig. 8B), the process ends as it is. When the learning contribution determination unit 304 determines that the use-stopped parameters are changed from those at the previous learning time and are not the low contribution parameters (they sufficiently contribute) (NO in step S808 of Fig. 8B), the process proceeds to step S809 of Figs. 8A and 8B. The learning contribution determination unit 304 transmits a relearning command to give a relearning instruction including the use-stopped parameters to the learning processing unit 303 in step S808 of Figs. 8A and 8B.

The learning processing unit 303 receives the relearning command transmitted in step S809 and acquires the learning input data including the use-stopped parameters from the input data storage unit 302 in response to the received relearning command (step S810 of Fig. 8A). The learning processing unit 303 performs the learning process using the learning input data acquired in step S809 (step S811 of Fig. 8A). The learning processing unit 303 stores the prediction model generated through the learning process of step S811 in the prediction model storage unit 306 and replaces the prediction model with the prediction model during a practical operation by an automatic or manual operation.

The learning contribution determination unit 304 determines the parameter acquisition device 103 acquiring the use-stopped parameters not considered as the low contribution parameters (step S812 of Figs. 8A and 8B). That is, the learning contribution determination unit 304 specifies the parameter acquisition device 103 acquiring the use-stopped parameters not considered as the low contribution parameters in step S812. The learning contribution determination unit 304 transmits an operation resuming command for the parameter acquisition device 103 specified in step S812 to the control command reception unit 400 of the gateway device 102 via the control command transmission unit 305 (step S813 of Figs. 8A and 8B). The control command reception unit 400 receives the operation resuming command transmitted in step S813. The parameter acquisition device control unit 401 performs control such that the operation of the parameter acquisition device 103 specified in step S812 resumes in response to the operation resuming command received by the control command reception unit 400 (step S814 of Fig. 8A).

Other embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. A system for managing a prediction model generated by a learning process using input data including a plurality of parameters, the system comprising:

   a first calculation means (304) configured to calculate a learning contribution ratio of each of the plurality of parameters from a learning result;
   a first specifying means (304) configured to specify parameters of which the learning contribution ratios are low from the learning contribution ratios calculated by the first calculation means;
   a first instruction means (304) configured to give a relearning instruction using input data excluding the parameters specified by the first specifying means;
   a second specifying means (304) configured to specify configurations (103) corresponding to the parameters specified by the first specifying means; and
   a first issuing means (304) configured to issue a stop command for the configuration specified by the second specifying means.

2. The system according to claim 1, wherein the first issuing means causes a process to be different according to whether the configuration specified by the second specifying means is included in a list.

3. The system according to claim 2, wherein the first issuing means issues an operation stop command for a configuration not included in the list among the configurations specified by the second specifying means and issues a communication stop command for the configuration included in the list among the configurations specified by the second specifying means.

4. The system according to any one of claims 1 to 3, further comprising:

   an acquisition means (303) configured to temporarily acquire the parameters specified by the first specifying means under a predetermined condition;
   a second instruction means (304) configured to give a relearning instruction using input data including the temporarily acquired parameters;
   a second calculation means (304) configured to calculate learning contribution ratios of the parameters specified by the first specifying means from a learning result of the relearning using the input data including the temporarily acquired parameters;
   a third specifying means (304) configured to specify configurations corresponding to parameters of which the learning contribution ratios calculated by the second calculation means are not low; and
   a second issuing means (304) configured to issue a resuming command for the configurations specified by the third specifying means (304).

5. The system according to any one of claims 1 to 4, wherein the configuration specified by the second specifying means corresponds to at least one of a device, a sensor, and software.

6. The system according to any one of claims 1 to 5, wherein the prediction model predicts control on one of a smart home, an airplane, a ship, a robot including a drone, an image processing device including at least one of a printing device and a scanner, a 3D printer, and a communication relay device.

7. A method performed by a system that manages a prediction model generated with input data including a plurality of parameters in a learning process, the method comprising:

a first calculation step of calculating a learning contribution ratio of each of the plurality of parameters from a learning result;

a first specifying step of specifying parameters of which the learning contribution ratios are low from the learning contribution ratios calculated in the first calculation step;

a first instruction step of giving a relearning instruction using input data excluding the parameters specified in the first specifying step;

a second specifying step of specifying configurations corresponding to the parameters specified in the first specifying step; and

a first issuing step of issuing a stop command for the configuration specified in the second specifying step.

8. A program causing a computer to function as each means of the system according to any one of claims 1 to 6.

FIG. 1

100

104

NETWORK

101

PARAMETER OPTIMIZATION SYSTEM

102

GATEWAY DEVICE

103

PARAMETER ACQUISITION DEVICE

## FIG. 2A

101, 102

**PARAMETER OPTIMIZATION SYSTEM, GATEWAY DEVICE**

200 CPU ⟷

201 RAM ⟷

202 ROM ⟷

203 NETWORK I/F ⟷

204

205
SECONDARY STORAGE DEVICE

## FIG. 2B

103

**PARAMETER ACQUISITION DEVICE**

206 NETWORK I/F ⟷ 207 PARAMETER ACQUISITION DEVICE CORE

FIG. 3

PARAMETER OPTIMIZATION SYSTEM — 101

COLLECTED DATA RECEPTION UNIT — 300

INPUT DATA GENERATION UNIT — 301

INPUT DATA STORAGE UNIT — 302

LEARNING CONTRIBUTION DETERMINATION UNIT — 304

LEARNING PROCESSING UNIT — 303

PREDICTION MODEL STORAGE UNIT — 306

PREDICTION PROCESSING UNIT — 307

CONTROL COMMAND TRANSMISSION UNIT — 305

OUTPUT UNIT — 308

FIG. 4

GATEWAY DEVICE — 102

CONTROL COMMAND RECEPTION UNIT — 400

PARAMETER ACQUISITION DEVICE CONTROL UNIT — 401

PARAMETER TRANSMISSION UNIT — 402

PARAMETER TRANSMISSION CONTROL UNIT — 403

PARAMETER RECEPTION UNIT — 404

FIG. 5

PARAMETER ACQUISITION DEVICE ⌐103

PARAMETER TRANSMISSION UNIT ⌐500

PARAMETER ACQUISITION UNIT ⌐501

# FIG. 6A

302 INPUT DATA STORAGE UNIT

303 LEARNING PROCESSING UNIT

304 LEARNING CONTRIBUTION DETERMINATION UNIT

401 PARAMETER ACQUISITION DEVICE CONTROL UNIT

103 PARAMETER ACQUISITION DEVICE

S600: ACQUIRE INPUT DATA FOR CALCULATING CONTRIBUTION RATIOS

INPUT DATA

S601: LEARNING PROCESS

S602: LEARNING RESULT

S603: ACQUIRE LEARNING CONTRIBUTION RATIOS

S604: UPDATE LEARNING PARAMETERS

S605: ACQUIRE LEARNING INPUT DATA

INPUT DATA

S606: LEARNING PROCESS

S607: DETERMINE DEVICE ACQUIRING LOW CONTRIBUTION PARAMETERS

S608: OPERATION STOP COMMAND FOR PARAMETER ACQUISITION DEVICE

S609: OPERATION STOP FOR PARAMETER ACQUISITION DEVICE

FIG. 6B

START PROCESS OF
RECEIVING LEARNING RESULT

ACQUIRE LEARNING CONTRIBUTION RATIO OF EACH
PARAMETER FROM LEARNING RESULT AND SET
PARAMETERS WITH LOW LEARNING CONTRIBUTION RATIOS
AS LOW CONTRIBUTION PARAMETERS — S603

TRANSMIT RELEARNING COMMAND EXCLUDING
LOW CONTRIBUTION PARAMETERS TO
LEARNING PROCESSING UNIT — S604

DETERMINE PARAMETER ACQUISITION DEVICE ACQUIRING
LOW CONTRIBUTION PARAMETERS — S607

TRANSMIT OPERATION STOP COMMAND OF PARAMETER
ACQUISITION DEVICE TO GATEWAY DEVICE — S608

END

FIG. 7A

302 INPUT DATA STORAGE UNIT

303 LEARNING PROCESSING UNIT

304 LEARNING CONTRIBUTION DETERMINATION UNIT

401 PARAMETER ACQUISITION DEVICE CONTROL UNIT

103 PARAMETER ACQUISITION DEVICE

403 PARAMETER TRANSMISSION CONTROL UNIT

S700: ACQUIRE INPUT DATA FOR CALCULATING CONTRIBUTION RATIOS

INPUT DATA

S701: LEARNING PROCESS

S702: LEARNING RESULT

S703: ACQUIRE LEARNING CONTRIBUTION RATIOS

S704: UPDATE LEARNING PARAMETERS

S705: ACQUIRE LEARNING INPUT DATA

INPUT DATA

S706: LEARNING PROCESS

S707: DETERMINE DEVICE ACQUIRING LOW CONTRIBUTION PARAMETERS

S708: DETERMINE WHETHER ACQUISITION DEVICES OF LOW CONTRIBUTION PARAMETERS ARE INCLUDED IN CONSTANT OPERATION LIST

S709: OPERATION STOP COMMAND FOR PARAMETER ACQUISITION DEVICE

S710: STOP OPERATION OF PARAMETER ACQUISITION DEVICE

S711: STOP COMMUNICATION OF PARAMETER ACQUISITION DEVICE

## FIG. 7B

```
        ┌──────────────────────────────┐
        │  START PROCESS OF RECEIVING   │
        │       LEARNING RESULT         │
        └──────────────────────────────┘
                      │
                      ▼
    ┌────────────────────────────────────────┐
    │    ACQUIRE LEARNING CONTRIBUTION         │
    │    RATIO OF EACH PARAMETER FROM          │
    │ LEARNING RESULT AND SET PARAMETERS       │── S703
    │   WITH LOW LEARNING CONTRIBUTION         │
    │    RATIOS AS LOW CONTRIBUTION            │
    │          PARAMETERS                      │
    └────────────────────────────────────────┘
                      │
                      ▼
    ┌────────────────────────────────────────┐
    │    TRANSMIT RELEARNING COMMAND           │
    │     EXCLUDING LOW CONTRIBUTION           │── S704
    │ PARAMETERS TO LEARNING PROCESSING        │
    │              UNIT                        │
    └────────────────────────────────────────┘
                      │
                      ▼
    ┌────────────────────────────────────────┐
    │  DETERMINE PARAMETER ACQUISITION         │
    │  DEVICE ACQUIRING LOW CONTRIBUTION       │── S707
    │            PARAMETERS                    │
    └────────────────────────────────────────┘
                      │
                      ▼
```

S708

IS PARAMETER ACQUISITION DEVICE INCLUDED IN CONSTANT OPERATION PARAMETER ACQUISITION DEVICE LIST?

NO → S709

TRANSMIT OPERATION STOP COMMAND FOR PARAMETER ACQUISITION DEVICE TO GATEWAY DEVICE

YES

TRANSMIT COMMUNICATION STOP COMMAND FOR PARAMETER ACQUISITION DEVICE TO GATEWAY DEVICE — S711

END

# FIG. 8A

Sequence diagram showing interactions between:
- INPUT DATA STORAGE UNIT (302)
- LEARNING PROCESSING UNIT (303)
- LEARNING CONTRIBUTION DETERMINATION UNIT (304)
- PARAMETER ACQUISITION DEVICE CONTROL UNIT (401)
- PARAMETER ACQUISITION DEVICE (103)

S800: TEMPORARILY OPERATE STOPPED PARAMETER ACQUISITION DEVICE AT GIVEN TIMING

S801: ACQUISITION DEVICE, TEMPORARY OPERATION COMMAND

S802: ACQUIRE PARAMETERS

S803: TRANSMIT MODEL UPDATING PARAMETERS

S804: ACQUIRE INPUT DATA FOR RECALCULATING CONTRIBUTION RATIOS

INPUT DATA

S805: LEARNING PROCESS

S806: LEARNING RESULT

S807: ACQUIRE LEARNING CONTRIBUTION RATIOS

S808: DETERMINE CONTRIBUTION RATIOS OF USE-STOPPED PARAMETERS

S809: UPDATE LEARNING PARAMETERS

S810: ACQUIRE LEARNING INPUT DATA

INPUT DATA

S811: LEARNING PROCESS

S812: DETERMINE DEVICE ACQUIRING USE-STOPPED PARAMETERS

S813: OPERATION RESUMING COMMAND FOR ACQUISITION DEVICE

S814: RESUME OPERATION OF ACQUISITION DEVICE

## FIG. 8B

```
        ┌─────────────────────────────────┐
        │   START PROCESS OF RECEIVING     │
        │       LEARNING RESULT            │
        └─────────────────────────────────┘
                        │
                        ▼
   ┌───────────────────────────────────────────┐
   │ ACQUIRE LEARNING CONTRIBUTION RATIO OF EACH │
   │ PARAMETER FROM LEARNING RESULT AND SET      │── S807
   │ PARAMETERS WITH LOW LEARNING CONTRIBUTION   │
   │ RATIOS AS LOW CONTRIBUTION PARAMETERS       │
   └───────────────────────────────────────────┘
                        │
                        ▼                    S808
              ◇─────────────────────◇
             ╱  ARE USE-STOPPED       ╲  YES
            ◇   PARAMETERS LOW         ◇────────┐
             ╲  CONTRIBUTION PARAMETERS?╱        │
              ◇─────────────────────◇           │
                        │ NO                     │
                        ▼                        │
   ┌───────────────────────────────────────────┐│
   │ TRANSMIT RELEARNING COMMAND TO WHICH        │── S809
   │ USE-STOPPED PARAMETERS ARE ADDED            ││
   └───────────────────────────────────────────┘│
                        │                        │
                        ▼                        │
   ┌───────────────────────────────────────────┐│
   │ DETERMINE PARAMETER ACQUISITION DEVICE      │── S812
   │ ACQUIRING USE-STOPPED PARAMETERS            ││
   └───────────────────────────────────────────┘│
                        │                        │
                        ▼                        │
   ┌───────────────────────────────────────────┐│
   │ TRANSMIT OPERATION RESUMING COMMAND FOR     │── S813
   │ PARAMETER ACQUISITION DEVICE TO GATEWAY DEVICE││
   └───────────────────────────────────────────┘│
                        │◄───────────────────────┘
                        ▼
              ┌──────────────────┐
              │       END        │
              └──────────────────┘
```

Europäisches
Patentamt

European
Patent Office

Office européen
des brevets

## EUROPEAN SEARCH REPORT

Application Number

EP 20 18 7470

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2011 197934 A (SONY CORP) 6 October 2011 (2011-10-06) * figure 27 * | 1-8 | INV. G06F16/55 |
| | ----- | | |

TECHNICAL FIELDS
SEARCHED (IPC)

G06F

The present search report has been drawn up for all claims

| Place of search | Date of completion of the search | Examiner |
|---|---|---|
| The Hague | 30 September 2020 | Rameseder, Jonathan |

EPO FORM 1503 03.82 (P04C01)

## ANNEX TO THE EUROPEAN SEARCH REPORT
## ON EUROPEAN PATENT APPLICATION NO.

EP 20 18 7470

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2020

| Patent document cited in search report | Publication date | Patent family member(s) | Publication date |
|---|---|---|---|
| JP 2011197934 A | 06-10-2011 | NONE | |

EPO FORM P0459

For more details about this annex : see Official Journal of the European Patent Office, No. 12/82

**REFERENCES CITED IN THE DESCRIPTION**

**Patent documents cited in the description**

- JP 2011197934 A